# EUROPEAN PATENT SPECIFICATION

(11) **EP 0 720 437 B1**
(45) Date of publication and mention of the grant of the patent: **08.05.2002**
(21) Application number: 94929137.1
(22) Date of filing: 06.09.1994
(51) Int. Cl.: A47J 37/06, A47J 37/08

(54) **GRILLING APPLIANCE**
GRILLGERÄT
APPAREIL A GRIL

(30) Priority: 09.09.1993 IL 10695793
(43) Date of publication of application: 10.07.1996
(73) Proprietor: THE DIME GROUP CORP., New York, NY 10001 (US)
(72) Inventor: MASEL, Ruben, 47213 Ramat Hasharon (IL); VALDSHTEIN, George, 55900 Givat Savyon (IL)
(74) Representative: Modiano, Guido, Dr.-Ing.
(86) International application number: US9409968
(87) International publication number: WO9507042

(56) References cited:
- DE-A- 2 417 505
- GB-A- 165 530
- US-A- 1 896 537
- US-A- 1 929 166
- US-A- 2 632 379
- US-A- 3 746 837
- US-A- 3 824 916
- US-A- 3 938 431
- US-A- 4 762 058
- US-A- 5 181 455

## Description

The present invention relates to grilling appliances, and particularly to an electrical grilling appliance for use in grilling meat products, such as steaks, hamburgers, and the like, in an extremely short time.

A large number of electrical grilling appliances are known and described in the patent literature. The known grilling appliances generally include open grills, racks or meshes for holding the food article to be grilled. However, such grilling appliances usually require a considerable period of time to grill a steak or hamburger. Other appliances are known, such as described in our prior US Patents 4,762,058 and 5,181,455, which permit food articles to be grilled in a relatively short period of time.

Other art is available in connection with grilling or toasting in which one or more of the heating elements is moveable. For instance DE-A-24 17 505 discloses a commercial toaster for browning or heating of dry food articles, such as bread. In this arrangement some adjustment of the position of one of the heating plates is possible. GB-A-165,530 also discloses a grilling device having a pair of heating elements which may be moved relative to each other. This arrangement is designed to cook using radiant heat from the heating elements.

An object of the present invention is to provide a novel simplified construction of electrical grilling appliance which permits food articles, such as steaks, hamburgers, and the like, to be grilled in a very short period of time.

According to the present invention, there is provided a grilling appliance, comprising:
a housing including a food compartment;
a heated first grill plate mounted for universal angular movement in a vertical position in one side of the food compartment;
a heated second grill plate mounted for universal angular movement in a vertical position in the opposite side of the food compartment;
and a drive for driving at least one of said grill plates to an extended position towards the other grill plate, and to a retracted position away from the other grill plate;
characterized by further comprising a food holder which comprises two flexible panels between which a food article may be received and which is arranged to be positioned in use in said food compartment between the grill plates with said food articles in a vertical position; and wherein in use said drive causes said food article to be cooked within said food holder to be pressed between said first and second grill plates; and
further comprising a floating mounting arranged to mount one of said heated grill plates to the housing to have movement about three orthogonal axes.

As will be described more particularly below, a grilling appliance of relatively simple structure may be constructed in accordance with the foregoing features to permit food articles, particularly meat products, to be grilled in a very short period of time. Thus, when, e.g., the second grill plate is driven to its extended position, it presses the food article between it and the first grill plate thereby producing high heat transfer between the two grill plates and the food article, which substantially reduces the required grilling time. Moreover, when grilling an article of greater thickness, the appliance applies a larger pressure by the two grilling plates, thereby increasing the heat transfer to it, and making the grilling time less dependent on the thickness of the food article.
Fig. 1 is a three-dimensional view illustrating one form of grilling appliance constructed in accordance with the present invention;
Fig. 2 diagrammatically illustrates the internal construction of the grilling appliance of Fig. 1;
Figs. 3 and 4 illustrate one type food holder for use in the grilling appliance of Figs. 1 and 2, Fig. 4 being a sectional view along line IV--IV of Fig. 3;
Figs. 5-7 illustrates another type food holder for use with the grilling appliance of Figs. 1 and 2, Fig. 6 being a side elevational view of Fig. 5, and Fig. 7 being a sectional view along line VII-VII of Fig. 5;
Fig. 8 illustrates a modification in the drive shown in Fig. 2 for driving one of the grill plates;
Fig. 9 is a sectional view along line IX--IX of Fig. 8 but illustrating the complete mounting of the lead screw;
and Fig. 10 is a three-dimensional view illustrating another external appearance that may be applied to the grilling appliance.

The grilling appliance illustrated in the drawings comprises a housing 2 of the general configuration of, but slightly larger than, a conventional electrical toaster. The housing includes a front wall 2a, a rear wall 2b, opposed end walls 2c, 2d, a bottom wall 2e and a top wall 2f. The top wall 2f is formed with an enlarged rectangular opening 4 for introducing the food article to be grilled into a food compartment 6 within the housing.

A first grill plate 8 is mounted in a vertical position on one side of the food compartment 6, and a second grill plate 10 is mounted in a vertical position on the opposite side of the food compartment. The two grill plates 8, 10 are similarly constructed with a metal face plate 12 facing the food compartment 6, an internal electrical heater 14, and thermal insulation 16.

Grill plate 8 is floatingly mounted to the housing end wall 2b by a plurality of horizontally-extending coil springs 18. This floating mounting permits universal angular movement of the grill plate about its X and Y axes, and further movement about its Z axis (i.e., towards and away from grill plate 10). Springs 18 are prestressed by an out-turned flange 20 carried at the outer periphery of grill plate 8, engageable with an inturned flange 21 carried by a wall of the housing 2.

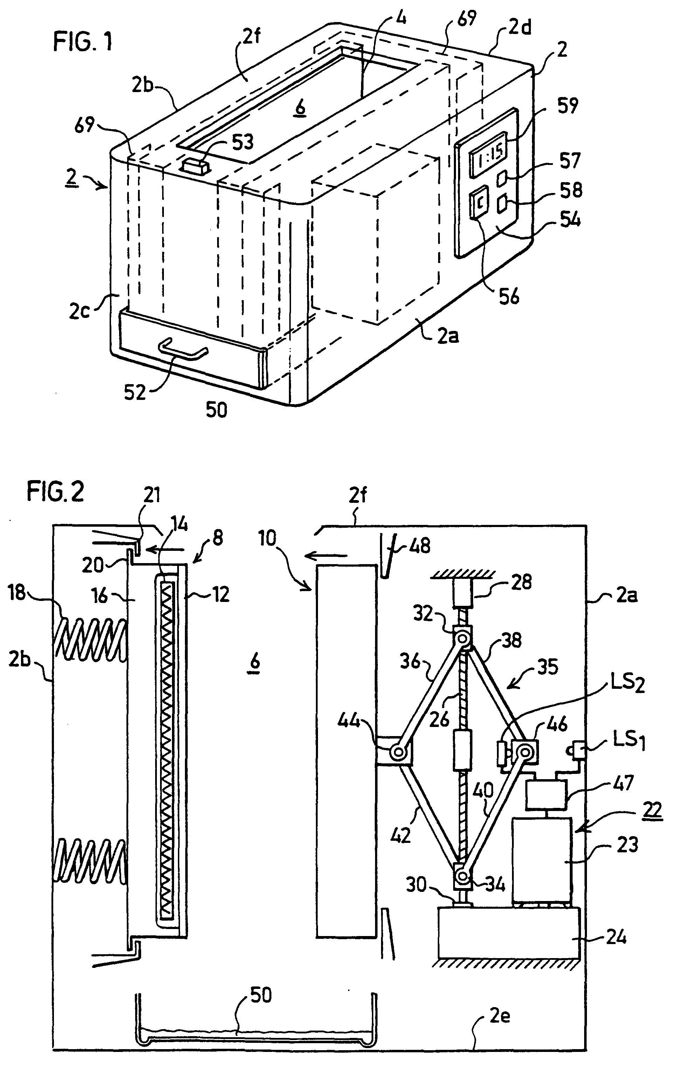

Housing 2 includes a drive 22 for driving the second grill plate 10 from a retracted position (as shown in Fig. 2) remote from the first grill plate 8, to an extended position towards grill plate 8. Drive 22 includes an electrical motor 23 coupled by a transmission 24 to rotate a lead screw 26 rotatably mounted between a pair of bearings 28, 30, fixed with respect to housing 2. A pair of nuts 32, 34 are threaded on opposite ends of the lead screw 26. The threads at the two ends are in opposite directions such that rotating the lead screw in one direction moves the nuts towards each other, and rotating the lead screw in the opposite direction moves the nuts away from each other. Nuts 32, 34 are coupled to grill plate 10 by a coupling mechanism which moves grill plate 10 towards its extended position during the rotation of the lead screw in one direction, and towards its retracted position during the rotation of the lead screw in the opposite direction.

Thus, the two nuts 32, 34, are at the opposite corners of a parallelogram 35 which includes four pivotal links 36, 38, 40, 42. The third corner of the parallelogram includes a ball-and-socket universal coupling 44 to grill plate 10 which permits the grill plate to move angularly in all directions. The fourth corner of the parallelogram carries a switch actuator 46 for actuating two limit switches LS₁, LS₂ fixed with respect to housing 2 on opposite sides of the actuator. The two limit switches are part of a motor control circuitry 47 (Fig. 2), controlling the electrical motor 23. Limit switch LS₁ is located to be actuated by actuator 46 to deenergize the motor 22 when grill plate 10 has been moved to its extended position towards grill plate 8, and limit switch LS₂ is located to be actuated by actuator 46 to deenergize the motor when the grill plate has been moved to its retracted position away from grill plate 8. Housing 2 may include a stop 48 engageable with the grill plate 10 in its retracted position.

A drip pan 50 is receivable within housing 2 to underlie the food compartment 6, and thereby to catch the drippings from the food article during the time it is being grilled. Drip pan 50 is insertable into the housing via an opening formed in the housing end wall 2c, and is provided with a handle 52 to facilitate introducing and removing it from the housing.

A microswitch 53, at one side of opening 4 in the top wall 2f of the housing, is depressible for energizing the electrical heaters 14 within the two grill plates 8, 10, and for energizing the electrical motor 23. The front wall 2a of the housing is provided with a control panel 54 which includes an on/off switch 56, an up-time timer button 57, a down-time timer button 58, and a timer display 59 permitting the grilling time to be pre-selected and displayed.

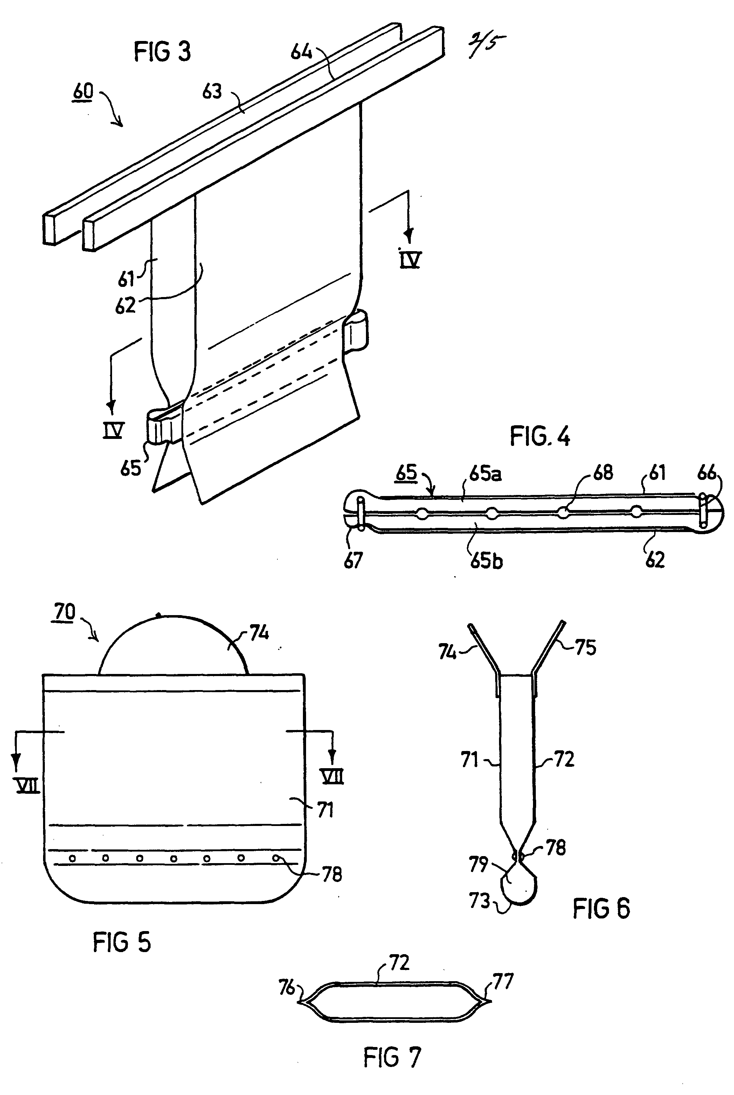

Figs. 3 and 4 illustrate one form of food holder 60 which may be used with the grilling appliance of Figs. 1 and 2 for holding the food articles within the grilling compartment 6 of the appliance. Food holder 60 includes a pair of flexible panels 61, 62 joined at their tops to a pair of handles 63, 64, and joined together at their bottoms by a clamping member 65. The sides of the two flexible panels 61, 62 are open so that the two panels may conveniently receive a food article (e.g., steak or hamburger) to be grilled. Clamp 65, which supports the food article between the two panels 61, 62, includes two jaws 65a, 65b pivotally mounted at one end by a clasp 66 or the like, and openable at the opposite end by a releasable clasp 67. The outer faces of the two jaws 65a, 65b are bonded to the inner faces of the two flexible panels 61, 62. The inner faces of the two jaws are formed with spaced recesses 68 defining drain openings to permit draining of liquids therethrough to the drip pan 50.

The flexible panels 61, 62 may be made of a heat-resistant, stick-resistant plastic, such as "Teflon" (Reg.T.M.), or of a flexible metal sheet material (e.g., aluminum) coated with such a heat-resistant, stick-resistant plastic. The dimensions of the flexible panel 61, 62 are larger than the dimensions of the two grill plates 8, 10, whereby they always completely cover them and keep them relatively clean. The overall thickness of the clamping member 65 is less than that of the food article to be held by the holder 60 so that the flexible panels 61, 62 better conform to the outer shape of the food article. A pair of removable splash guards 69 (Fig. 1) straddle the ends of the two grill plates 8, 10 on opposite sides of the food compartment 6.

The manner of using the grilling appliance illustrated in Figs. 1 and 2, including the food holder of Figs. 3 and 4, will be apparent from the above description. Thus, the movable grill plate 10 is initially in its retracted position, as shown in Fig. 2, with respect to the food compartment 6. The food article (e.g., a steak or hamburger) to be grilled is placed between the two flexible panels 61, 62 of the food holder 60, and the food holder is then introduced into the food compartment 6. The food article is suspended in the food compartment by the two handles 63, 64 engaging the outer surfaces of the housing top wall 2f on opposite sides of the opening 4. The microswitch 53 is actuated by one of the handles to energize the electrical heaters 14 within the grill plates 8, 10.

Switch 53 also energizes motor 23 to rotate lead screw 26. This moves grill plate 10 towards grill plate 8, and thereby firmly presses the food article between the two grill plates. Grill plate 10 is driven to this extended position until switch actuator 46 carried by the parallelogram 35 actuates limit switch LS₁, to deenergize the motor.

As grill plate 10 presses the food article against grill plate 8, grill plate 8 is permitted to move about all its three orthogonal axes by virtue of its floating mounting (coil springs 18) to the housing; and grill plate 10 is permitted to move about its two orthogonal axes by virtue of its ball-and-socket coupling 44 to the parallelogram 35. Grill plates 8, 10 are thus free to move to conform to the surface of the article being grilled within the food holder 60 as these grill plates apply pressure to the food article.

The firm pressure applied by the grill plates 8, 10 against the food article being grilled provides good heat-transfer from the grill plates to the food article, thereby speeding up the grilling process. The mounting springs 18 increase the pressure applied by the grill plates to the food articles with food articles of increased thickness, thereby making the grilling time less dependent on the thickness of the food articles.

When the grilling process has been completed, as preset by the timer, motor 23 is reenergized in the reverse direction, thereby retracting grill plate 10 until switch operator 46 actuates limit switch LS₂.

Figs. 5-7 illustrate a one-time use food holder (70) to be disposed after a single use. In this case, a single sheet is folded at a midportion to define a pair of flexible panels 71, 72, joined at their bottoms 73. The upper ends of the two sheets may be stiffened with cardboard strips to define handles 74, 75 which project outwardly of the appliance housing 2 when the food holder, including the food article held thereby, is inserted through opening 4 into the food compartment 6. In this case, the opposite sides of the flexible panels 71, 72, are joined together, as shown at 76 and 77 in Fig. 7, to produce a pocket for receiving the food article. This pocket is partially closed by a plurality of clips 78 extending through the two panels 71, 72, or by spots of adhesive or spot welds, adjacent the folded bottom 73, to define another compartment 79 for receiving the drippings from the food article.

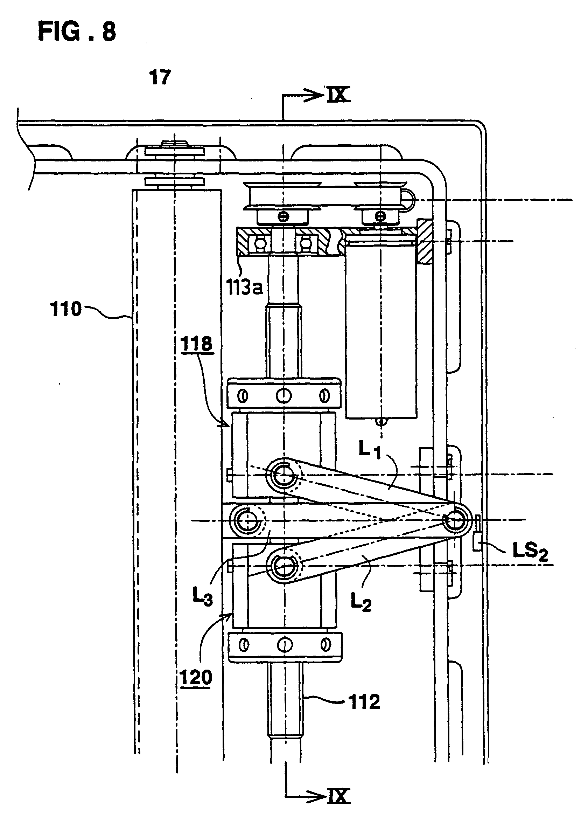

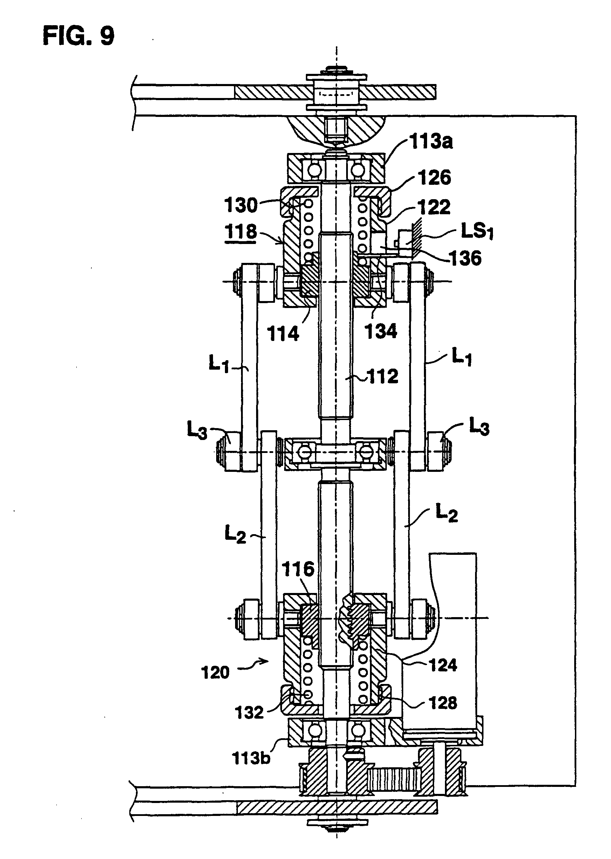

Figs. 8 and 9 illustrate a modification in the coupling mechanism of Fig. 2 coupling the grill plate 110 (corresponding to grill plate 10, Fig. 2) to the two nuts carried by the lead screw 112 rotatably mounted between bearings 113a, 113b, such that the grill plate is moved towards its extended position during the rotation of the lead screw in one direction, and towards its retracted position during the rotation of the lead screw in the opposite direction. The two nuts, shown at 114, 116 in Fig. 9, are each part of a nut assembly, 118, 120, respectively. Each assembly provides a force-yieldable coupling to grill plate 110, such as to yield when grill plate 110 forceably presses the food article against the other grill plate (8, Fig. 2).

Thus, each nut assembly 118, 120 includes a housing 122, 124 enclosing its respective nut and axially movable with respect thereto. Each housing 122, 124 is closed by an apertured end cap 126, 128, through which the lead screw 112 passes. A coil spring 130, 132 is interposed between the cap and nut of each assembly for urging the housing in the outward direction with respect to the nut.

A first pair of links L₁ are pivotally coupled at one of their ends to nut housing 122, and a second pair of links L₂ are pivotally coupled at one of their ends to nut housing 124. The opposite ends of the two pairs of links are pivotally coupled to one end of a third pair of links L₃, and the opposite ends of the latter links are pivotally coupled to grill plate 110.

A limit switch LS₁ is located to be actuated by an actuator 134 carried by nut 114. Actuator 134 projects through a slot 136 in housing 122 and actuates switch LS₁ upon the yielding of spring 130 a predetermined magnitude. Limit switch LS₁, as limit switch LS₁ in Fig. 2, deenergizes the electrical motor (23, Fig. 2) in the extended position of grill plate 110. A second limit switch LS₂ (Fig. 8) is actuated by the pivotal ends of the three pairs of links L₁, L₂, L₃ to deenergize the motor in the retracted position of the grill plate.

The coupling mechanism illustrated in Figs. 8 and 9 operates as follows:

As in the grill-coupling mechanism illustrated in Fig. 2, the two nuts 114, 116 move towards each other during one direction of rotation of lead screw 112, and away from each during the opposite direction of rotation of the lead screw. In this case, however, when the drive motor (23, Fig. 2) is energized to drive lead screw 112 in the direction moving the two nuts 114, 116 further apart, the links L₁, L₂, L₃ are effective to move grill plate 112 to its extended position, i.e., towards the other grill plate (8, Fig. 2, rather than to its retracted position as in Fig. 2) with the food article between the two grill plates. As soon as grill plate 110 presses the food article against grill plate 8, the two springs 130, 132 begin to yield according to the force applied against the food article. Yielding of spring 130 causes switch actuator 134 carried by nut 114 to move towards limit switch LS₁, such that when this yielding has attained a predetermined magnitude, the limit switch LS₁ is actuated to deenergize the electrical motor in this extended position of grill plate 110. The motor is deenergized in its retracted position by limit switch LS₂ (Fig. 8).

This arrangement provides a number of advantages over the arrangement illustrated in Fig. 2. Thus, the extended position of grill plate 110 is not determined by a fixedly-located limit switch (LS₁ in Fig. 2), but rather is determined by the application of a predetermined force by the grill plate 110 to the food article while pressing it against the other grill plate (8, Fig. 2).

Moreover, this predetermined force varies with the thickness of the food article being grilled. Thus, the force applied by grill plate 110 to the food article in order to cause the two springs 130, 132 to yield, increases in an inverse relation to the distance between the two nut assemblies 118, 120 of the two springs 130, 132. Therefore, the magnitude of the force applied by grill plate 110 against the food article when the grill plate is in its extended position will be larger when relatively thick food articles are being grilled (as the two nut assemblies will then be closer together) than when thinner food articles are being grilled. This accelerates the grilling of relatively thick food articles, thereby making the grilling time less dependent on the thickness of the food articles being grilled. If the thickness of the food article decreases during the grilling process, the motor will be energized to maintain the pressure.

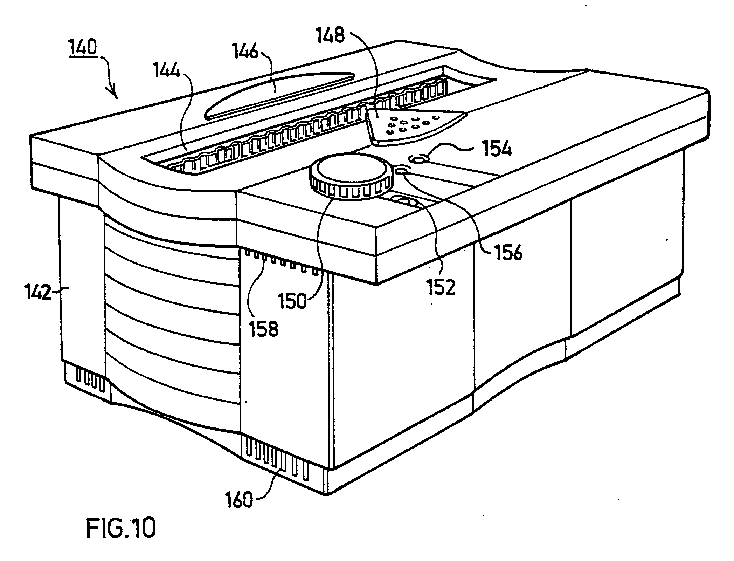

Fig. 10 illustrates one example of an external appearance that a grilling appliance constructed in accordance with the present invention may take, particularly one including the coupling mechanism illustrated in Figs. 8 and 9. Thus, grilling appliance 140 includes a housing 142 formed with a large rectangular opening 144 in its top wall for introducing the food article to be grilled. Opening 144 is straddled by a pair of electrical switch operators 146, 148, both of which must be manually depressed in order to energize the electrical heaters and the electrical motor in the appliance. Thus, whether using the food holder illustrated in Figs. 3 and 4, or the one-time use food holder illustrates in Figs. 5-7, the two handles of the food holder must be pressed against the two switch operators 146, 148 in order to energize the appliance. This is a safety feature to lessen the possibility of an operator accidentally having a finger or hand within opening 144 at the time the appliance is energized.

The appliance illustrated in Fig. 10 further includes a presettable timer 150, a display 152, displaying the preset time, a pilot lamp 154 energized to indicate the appliance is on, and a second pilot lamp 156 energized to indicate that the electrical heaters are operating. Housing 142 is further provided with ventilating openings 158, 160.

## Claims

1. A grilling appliance, comprising:
a housing (2) including a food compartment (6);
a heated first grill plate (8) mounted for universal angular movement in a vertical position in one side of the food compartment (6);
a heated second grill plate (10) mounted for universal angular movement in a vertical position in the opposite side of the food compartment (6);
and a drive (22) for driving at least one of said grill plates (8,10) to an extended position towards the other grill plate, and to a retracted position away from the other grill plate;
**characterised by** further comprising a food holder (60) which comprises two flexible panels (61,62) between which a food article may be received and which is arranged to be positioned in use in said food compartment (6) between the grill plates (8,10) with said food articles in a vertical position; and wherein in use said drive (22) causes said food article to be cooked within said food holder (60) to be pressed between said first and second grill plates (8,10); and
further comprising a floating mounting (18) arranged to mount one of said heated grill plates to the housing (2) to have movement about three orthogonal axes.

2. The appliance according to Claim 1, wherein each of said grill plates (8,10) includes an electrical heater (14) enclosed within the respective grill plate.

3. The appliance according to Claim 1, wherein said first grill plate (8) is mounted by said floating mounting which comprises a spring assembly including a plurality of prestressed horizontally extending coil springs (18) mounting the first grill plate (8) to a wall of the housing (2).

4. The appliance according to any one of Claims 1-3 wherein said drive (22) drives said second grill plate (10) towards said first grill plate (8) and comprises: an electrical motor (23) including motor control circuitry therefor; a lead screw (26) rotated by the motor and including a pair of nuts (32,34) threaded thereon such that the nuts are moved towards or away from each other by the rotation of the lead screw according to the direction of rotation thereof; and a coupling mechanism coupling the two nuts to the second grill plate to move it towards its extended position during the rotation of the lead screw in one direction, and towards its retracted position during the rotation of the lead screw in the opposite direction.

5. The appliance according to Claim 4, wherein said coupling mechanism includes four links (36,38,40,42) connected together as a parallelogram (35), said nuts being located at two opposite comers of the parallelogram, said parallelogram being connected to said second grill plate (10) at a third corner of the parallelogram.

6. The appliance according to Claim 4, wherein said coupling mechanism includes a force-yieldable coupling which yields when the second grill plate forceably presses the food article against the first grill plate, said motor control circuitry including an electrical switch which deenergizes the electrical motor when said coupling yields a predetermined magnitude.

7. The appliance according to Claim 1, wherein said grill plates (8,10) include electrical heaters (14), said housing (2) includes an opening (4) in a top wall thereof in alignment with said food compartment (6) for introducing the food article and food holder (6) into said food compartment.

8. The appliance according to Claim 7, wherein said food holder (60) includes a pair of handles (63,64) arranged to project externally of the housing to facilitate introducing and removing the food holder and the food article held thereby with respect to said food compartment (6).

9. The appliance according to Claim 8, wherein said flexible panels (61,62) are joined at their tops to respective ones of said handles (63,64) and joined together at their bottoms for holding the food article between the flexible panels.

10. The appliance according to any one of Claims 6-9, further including an electrical switch on at least one side of the opening in the top wall of the housing for energizing said electrical heaters upon introducing said food article into the food compartment.

11. The appliance according to any one of Claims 1-10, wherein dimensions of said flexible panels (61,62) are larger than dimensions of said grill plates (8,10) whereby in use, said flexible panels completely cover the grill plates.

## Patentansprüche

1. Ein Grillgerät, das folgendes umfasst:
ein Gehäuse (2), das ein Lebensmittelfach (6) einschließt;
eine erhitzte erste Grillplatte (8), die für eine universelle Winkelbewegung in einer senkrechten Stellung an einer Seite des Lebensmittelfaches (6) angebracht ist;
eine erhitzte zweite Grillplatte (10), die für eine universelle Winkelbewegung in einer senkrechten Stellung an der gegenüberliegenden Seite des Lebensmittelfaches (6) angebracht ist;
und einen Antrieb (22) zum Antreiben von mindestens einer der Grillplatten (8, 10) in eine erstreckte Stellung in Richtung der anderen Grillplatte und in eine eingezogene Stellung weg von der anderen Grillplatte;
**dadurch gekennzeichnet, dass** es weiterhin einen Lebensmittelhalter (60) umfasst, der zwei flexible Platten (61, 62) umfasst, zwischen denen ein Lebensmittelartikel aufgenommen werden kann, und der angeordnet ist, um im Lebensmittelfach (6) in Verwendung zwischen die Grillplatten (8, 10) gesetzt zu werden, wobei sich die Lebensmittelartikel in einer senkrechten Stellung befinden; und worin der Antrieb (22) in Verwendung bewirkt, dass der Lebensmittelartikel, der innerhalb des Lebensmittelhalters (60) zubereitet werden soll, zwischen der ersten und der zweiten Grillplatte (8, 10) gepresst wird; und
dass es weiterhin eine schwimmende Anbringung (18) umfasst, die angeordnet ist, um eine der erhitzten Grillplatten am Gehäuse (2) anzubringen, um eine Bewegung um drei orthogonale Achsen herum zu haben.

2. Das Gerät nach Anspruch 1, worin jede der Grillplatten (8, 10) ein elektrisches Heizgerät (14) einschließt, das innerhalb der jeweiligen Grillplatte eingeschlossen ist.

3. Das Gerät nach Anspruch 1, worin die erste Grillplatte (8) mittels der schwimmenden Anbringung angebracht wird, die eine Federgruppe umfasst, die eine Mehrzahl von vorgespannten, sich horizontal erstreckenden Schraubenfedern (18) einschließt, die die erste Grillplatte (8) an einer Wand des Gehäuses (2) anbringt.

4. Das Gerät nach irgendeinem der Ansprüche 1-3, worin der Antrieb (22) die zweite Grillplatte (10) in Richtung der ersten Grillplatte (8) antreibt und einen Elektromotor (23) umfasst, der eine Motorsteuerschaltung dafür einschließt; wobei eine Führungsschraube (26) vom Motor gedreht wird und ein Paar von Muttern (32, 34) einschließt, die derart daran geschraubt werden, dass die Muttern durch die Drehung der Führungsschraube in Übereinstimmung mit der Richtung ihrer Drehung aufeinander zu oder voneinander weg bewegt werden; und wobei ein Kopplungsmechanismus die zwei Muttern an die zweite Grillplatte koppelt, um sie während der Drehung der Führungsschraube in einer Richtung in die erstreckte Stellung zu bewegen und sie während der Drehung der Führungsschraube in der entgegengesetzten Richtung in ihre eingezogene Stellung zu bewegen.

5. Das Gerät nach Anspruch 4, worin der Kopplungsmechanismus vier Verbindungsglieder (36, 38, 40, 42) einschließt, die als ein Parallelogramm (35) miteinander verbunden sind, wobei sich die Muttern an zwei entgegengesetzten Ecken des Parallelogramms befinden, wobei das Parallelogramm an einer dritten Ecke des Parallelogramms mit der zweiten Grillplatte (10) verbunden wird.

6. Das Gerät nach Anspruch 4, worin der Kopplungsmechanismus eine Kraft-nachgebende Verbindung einschließt, die nachgibt, wenn die zweite Grillplatte den Lebensmittelartikel zwangsweise gegen die erste Grillplatte drückt, wobei die Motorsteuerschaltung einen elektrischen Schalter einschließt, der den Elektromotor abschaltet, wenn die Verbindung eine vorbestimmte Größe ergibt.

7. Das Gerät nach Anspruch 1, worin die Grillplatten (8, 10) elektrische Heizgeräte (14) einschließen, wobei das Gehäuse (2) in seiner oberen Wand in Ausrichtung mit dem Lebensmittelfach (6) eine Öffnung (4) einschließt, um den Lebensmittelartikel und den Lebensmittelhalter (6) in das Lebensmittelfach einzuführen.

8. Das Gerät nach Anspruch 7, worin der Lebensmittelhalter (60) ein Paar an Handgriffen (63, 64) einschließt, die angeordnet sind, um außerhalb vom Gehäuse zu ragen, um das Einführen und Wegnehmen des Lebensmittelhalters und des davon gehaltenen Lebensmittelartikels in Bezug zum Lebensmittelfach (6) zu erleichtern.

9. Das Gerät nach Anspruch 8, worin die flexiblen Platten (61, 62) an ihren Oberseiten an den jeweiligen Handgriffen (63, 64) verbunden sind und an ihren Unterseiten verbunden sind, um den Lebensmittelartikel zwischen den flexiblen Platten zu halten.

10. Das Gerät nach irgendeinem der Ansprüche 6-9, das weiterhin an zumindest einer Seite der Öffnung in der oberen Wand des Gehäuses einen elektrischen Schalter einschließt, um die elektrischen Heizgeräte beim Einführen des Lebensmittelartikels in das Lebensmittelfach mit Strom zu versorgen.

11. Das Gerät nach irgendeinem der Ansprüche 1-10, worin die Abmessungen der flexiblen Platten (61, 62) größer sind als die Abmessungen der Grillplatten (8, 10), wodurch die flexiblen Platten während der Verwendung vollständig die Grillplatten abdecken.

## Revendications

1. Appareil à gril comprenant :
- un boîtier (2) contenant un compartiment à aliment (6) ;
- une première plaque de gril chauffée (8), montée pour effectuer un mouvement angulaire universel, en position verticale, d'un côté du compartiment à aliment (6) ;
- une seconde plaque de gril chauffée (10) montée pour effectuer un mouvement angulaire universel, en position verticale, du côté opposé du compartiment à aliment (6) ;
et un entraînement (22) pour entraîner au moins une des dites plaques de gril (8, 10) vers une position sortie en direction de l'autre plaque de gril, et vers une position rentrée éloignée de l'autre plaque de gril ;
**caractérisé en ce qu'**il comprend encore un support d'aliment (60) qui comporte deux panneaux flexibles (61, 62) entre lesquels un aliment peut être reçu et qui est agencé pour être positionné en service dans ledit compartiment à aliment (6) entre les plaques de gril (8, 10) avec lesdits aliments en position verticale ; et dans lequel, en service ledit entraînement (22) amène ledit aliment à cuire, placé dans ledit support d'aliment (60) à être comprimé entre lesdites première et seconde plaques de gril (8, 10) ; et
comprenant encore un montage flottant (18) agencé pour monter une desdites plaques de gril sur le boltier (2) de façon qu'elle puisse se déplacer autour de trois axes orthogonaux.

2. Appareil selon la revendication 1, dans lequel chacune desdites plaques de gril (8, 10) comprend un élément électrique chauffant (14) enfermé dans la plaque de gril correspondante.

3. Appareil selon la revendication 1, dans lequel ladite première plaque (8) est montée grâce audit montage flottant lequel comprend un agencement de ressorts avec plusieurs ressorts en spirale (18) précontraints orientés horizontalement pour monter la première plaque de gril (8) sur une paroi du boîtier (2).

4. Appareil selon l'une quelconque des revendications 1-3 dans lequel ledit entraînement (22) entraîne ladite seconde plaque de gril (10) en direction de ladite première plaque (8) et comprend un moteur électrique (23) équipé de circuits de commande du moteur, une vis sans fin (26) entraînée en rotation par le moteur et sur laquelle deux écrous (32, 34) sont vissés de manière à ce que les écrous se rapprochent ou s'éloignent l'un de l'autre sous l'effet de la rotation de la vis dans un sens ou dans l'autre, et un mécanisme de couplage couplant les deux écrous à la seconde plaque de grille afin de la déplacer en direction de sa position sortie pendant la rotation de la vis dans un sens, et vers sa position rentrée pendant la rotation de la vis en sens opposé.

5. Appareil selon la revendication 4, dans lequel ledit mécanisme de couplage comprend quatre biellettes (36, 38, 40, 42) reliées entre elles en formant un parallélogramme (35), lesdits écrous étant placés en deux sommets opposés du parallélogramme, ledit parallélogramme étant relié à ladite seconde plaque de gril (10) et à un troisième sommet du parallélogramme.

6. Appareil selon la revendication 4, dans lequel, ledit mécanisme de couplage comprend un couplage fléchissant sous l'effet d'une force, lequel fléchit quand ladite seconde plaque de gril comprime à force ledit aliment contre la première plaque de gril, lesdits circuits de commande du moteur comprenant un interrupteur électrique qui met le moteur hors tension quand ledit couplage fléchit d'une amplitude prédéterminée.

7. Appareil selon la revendication 1, dans lequel lesdites plaques de gril (8, 10) contiennent des éléments électriques chauffants (14), ledit boîtier (2) comporte dans sa paroi supérieure, une ouverture (4) alignée avec ledit compartiment à aliment (6) pour introduire l'aliment et le support d'aliment dans ledit compartiment du boîtier.

8. Appareil selon la revendication 7, dans lequel ledit support d'aliment (60) porte deux poignées (63, 64) agencées pour dépasser à l'extérieur du boîtier et faciliter le déplacement du support d'aliment avec l'aliment qu'il porte vers l'intérieur ou l'extérieur du compartiment à aliment (6).

9. Appareil selon la revendication 8, dans lequel les panneaux flexibles (61, 62) sont assemblés à leur partie supérieure auxdites poignées respectives (63, 64) et assemblés entre eux à leur partie inférieure pour supporter l'aliment entre les panneaux flexibles

10. Appareil selon l'une quelconque des revendications 6 à 9, comprenant encore un interrupteur électrique d'un côté au moins de l'ouverture de la paroi supérieure du boîtier pour mettre sous tension lesdits éléments chauffants au moment de l'introduction dudit aliment dans le compartiment à aliment.

11. Appareil selon l'une quelconque des revendications 1 à 10, dans lequel les dimensions desdits panneaux flexibles (61, 62) sont supérieures à celles desdites plaques de gril (8, 10) grâce à quoi, en service, les panneaux flexibles couvrent complètement les plaques de gril.
